Europäisches Patentamt

European Patent Office

Office européen des brevets

(19)

(11) Veröffentlichungsnummer: **0 277 298 B1**

(12) **EUROPÄISCHE PATENTSCHRIFT**

(45) Veröffentlichungstag der Patentschrift: **24.04.91**

(51) Int. Cl.⁵: **F16F 9/43**, A47C 3/30

(21) Anmeldenummer: **87117186.4**

(22) Anmeldetag: **21.11.87**

(54) Gasfeder.

(30) Priorität: **08.01.87 DE 8700337 U**

(43) Veröffentlichungstag der Anmeldung:
**10.08.88 Patentblatt 88/32**

(45) Bekanntmachung des Hinweises auf die
Patenterteilung:
**24.04.91 Patentblatt 91/17**

(84) Benannte Vertragsstaaten:
**BE CH DE ES FR GB IT LI NL SE**

(56) Entgegenhaltungen:
DE-A- 2 214 639      DE-A- 3 103 952
DE-B- 1 151 410      DE-U- 8 601 132
GB-A- 1 532 001      US-A- 4 667 780

(73) Patentinhaber: **Ignaz Vogel GmbH & Co KG,
Fahrzeugsitze
Kleinsteinbacher Strasse 42-44
W-7500 Karlsruhe 41-Stu(DE)**

(72) Erfinder: **Schadegg, Heinz
Schützenhausstrasse 9
CH-9442 Berneck(CH)**
Erfinder: **Sonderer, Niklaus
Rosenweg 2
CH-9435 Heerbrugg(CH)**

(74) Vertreter: **Trappenberg, Hans
Postfach 1909
W-7500 Karlsruhe 1(DE)**

**Beschreibung**

Die Erfindung betrifft eine Gasfeder, die aus einem mit Druckgas oder einem Gemisch aus Druckgas und Hydraulikflüssigkeit gefüllten, stirnseitig mittels Dichtstücken verschlossenen Zylinder gebildet ist, der durch einen Kolben mit nach außen führender Kolbenstange in zwei Zylinderräume unterteilt ist, die beide zum Einstellen der Kolbenstellung über ein Ventil miteinander zu verbinden sind.

Eine Gasfeder dieser Art - und zwar in der speziellen Form einer Gas-Stellfeder - ist Gegenstand des DE-U- 86 01 132. Derartige Gas-Stellfedern werden insbesondere bei Sitzmöbeln, und hier wieder vorzugsweise bei Fahrgastsitzen, verwendet, insbesondere zum Einstellen entweder der Sitzhöhe oder auch der Winkellage der Rückenlehne derartiger Sitze. Sie haben den Vorteil, daß sie beim Verstellen kein Geräusch verursachen, daß sie kontinuierlich verstellbar, wartungsfrei und außerdem auf wirtschaftliche Art und Weise herstellbar sind.

Nach dem Herstellen der Gasfeder müssen die Zylinderinnenräume mit Druckgas oder einem Gemisch aus Druckgas und Hydraulikflüssigkeit gefüllt werden. Hierzu dienen Fülleinrichtungen, im einfachsten Fall bestehend aus allerdings aufwendig herzustellenden und innerhalb der Gasfeder viel Platz einnehmenden Rückschlagventilen, die allgemein als Kugelventile aufgebaut sind. Bei einer bekannten Gasfeder nach GB-A-15 32 001 ist eine Fülleinrichtung beschrieben, die in das der Freiseite des Kolbens gegenüberliegende Dichtstück zum Zylinderinnenraum hin integriert ist, wobei in einen eine Kreisnut aufweisenden Vorsatz ein Dichtring eingelegt ist. Es sind auch Konstruktionen bekannt, bei denen das der Freiseite des Kolbens gegenüberliegende Dichtstück nicht im Zylinder befestigt ist, sondern daß dieses Dichtstück erst dann eingefügt wird, wenn der Zylinderinnenraum mit Druckgas beziehungsweise dem Gemisch aus Druckgas und Hydraulikflüssigkeit gefüllt ist. Dies erfordert jedoch einen aufwendigen Füllautomaten, der nach Einfüllen des Druckgases das Dichtstück in seine Lage bringt und sicher mit dem Zylinder verbindet. Sowohl die aufwendigen Ventile, wie auch die aufwendige Fülleinrichtung verteuern die Herstellung derartiger Gasfedern sehr.

Aufgabe der Erfindung ist es daher, eine Gasfeder anzugeben, die sehr einfach aufgebaut und damit preiswert herstellbar ist, und die außerdem auch einfach zu befüllen ist. Erreicht wird dies nach der Erfindung dadurch, daß das der Freiseite des Kolbens einer derartigen Gasfeder gegenüberliegende Dichtstück zum Zylinderinnenraum hin einen mit einer Kreisnut versehenen Vorsatz aufweist, daß vom Grund dieser Kreisnut aus eine Bohrung ins Freie führt und daß in die Kreisnut ein Dichtring eingelegt ist.

Die Erfindung gibt damit eine Gasfeder mit einer Fülleinrichtung an, bei der die Fülleinrichtung äußerst einfach aufgebaut ist und kaum Platz beansprucht. Die einfache und preiswerte Herstellung ist schon dadurch gegeben, daß das Dichtstück ein Drehteil ist und auch der Vorsatz mitsamt der Kreisnut bei der Herstellung des Dichtstückes auf einer Drehmaschine mit angearbeitet werden können. Das Einlegen des Dichtringes in die Kreisnut bereitet keine Schwierigkeiten. Auch der Dichtring ist sehr preiswert, insbesondere wenn konventionelle O-Ringe beziehungsweise Rundgummidichtungen verwendet werden.

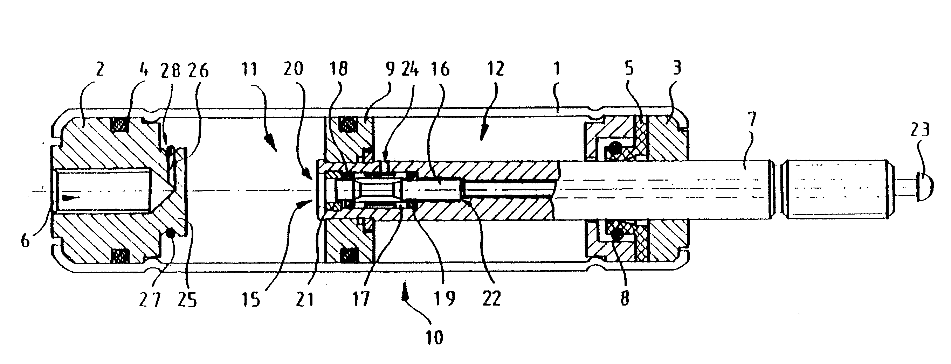

In der Zeichnung ist ein Ausführungsbeispiel nach der Erfindung schematisch dargestellt.

Ein zylindrisches Rohr (1) ist beidseits auf bekannte Art und Weise über Dichtstücke (2, 3) mit Dichtungen (4, 5) abgeschlossen. Im Dichtstück (2) befindet sich eine Gewindebohrung (6), die das Anschrauben der Gasfeder an beliebige Konstruktionsteile gestattet. Das Dichtstück (3) ist zum Durchtritt einer Kolbenstange (7) durchbohrt. Die Dichtung (5) ist weitergeführt zu einer Manschettendichtung (8), die auf der Kolbenstange (7) aufliegt. Die Kolbenstange (7) ist mit einem Kolben (9) verbunden, der den Zylinder (10) in zwei Zylinderräume (11, 12) unterteilt.

Zum Verbinden der beiden Zylinderräume (11, 12) dient ein Ventil (15). Dieses Ventil (15) ist als Schiebeventil ausgeführt und wird gebildet durch einen Ventilschieber (16) zusammen mit einer Ventilhülse (17) sowie beidseits der Ventilhülse (17) angeordneten Ventildichtungen (18, 19). Die Ventilhülse (17) mit ihren Ventildichtungen (18, 19) wird in einer Längsbohrung (20), die von der Stirnseite aus in die Kolbenstange (7) eingebracht ist, durch einen Abstandsring (21) gehalten. Der Ventilschieber (16) schlägt hierbei an eine Schulter (22) dieser Längsbohrung (20) an. Auf dem Ventilschieber (16) sitzt ein Stößel (23), der in der Kolbenstange (7) nach außen geführt wird.

In der Figur ist das Schiebeventil im geschlossenen Zustand gezeigt. Beim Drücken des Stößels (23) wird der Ventilschieber (16) aus dem Bereich der Dichtung (18) verschoben, so daß Druckgas und/oder Hydraulikflüssigkeit aus dem Zylinderraum (11) am Ventilschieber (16) vorbei durch die Bohrung (24) in den Zylinderraum (12) gelangen kann.

Zum Füllen dieser Gasfeder dient eine Fülleinrichtung, die in einfacher und bedienungsfreundlicher Art und Weise in dem der Freiseite des Kolbens (9) gegenüberliegenden Dichtstück (2) integriert ist. Dazu weist dieses Dichtstück (2) einen zum benachbarten Zylinderraum (11) hin gerichteten Vorsatz (25) auf, der zur Bildung einer Kreisnut (28) keilförmig hinterschnitten ist.

Die genannte Gewindebohrung (6) zum Anschrauben der Gasfeder an Konstruktionsteile ist bis zur Ebene der keilförmigen Kreisnut (28) hin verlängert. Über eine Bohrung (26), die radial zur Achse der Gasfeder in die Kreisnut (28) eingebracht ist, entsteht somit ein offener Durchgang von der freien Stirnseite des Dichtstücks (2) her in den Zylinderraum (11) hinein. Wird somit an die Gewindebohrung (6) ein geeigneter Anschluß angesetzt, so können der Zylinderraum (11) und über das Ventil (15) auch der Zylinderraum (12) mit Hydraulikflüssigkeit und Druckgas gefüllt werden.

Zur Abdichtung dieses Durchgangs (6, 26) dient ein Dichtring (27), der in die keilförmige Kreisnut (28) des Vorsatzes (25) eingelegt ist. Wird die Gasfeder mit Hydraulikflüssigkeit und/oder Druckgas über den aus der Gewindebohrung (6) und der Bohrung (26) bestehenden Füllkanal gefüllt, so wird der Dichtring (27) beiseite gedrückt. Sobald der Fülldruck erreicht und das Füllwerkzeug abgenommen ist, dichtet der Dichtring (27) den Zylinderraum hermetisch nach außen ab.

**Ansprüche**

1. Gasfeder, die aus einem mit Druckgas oder einem Gemisch aus Druckgas und Hydraulik-flüssigkeit gefüllten, stirnseitig mittels Dicht-stücken (2, 3) verschlossenen Zylinder (1) gebildet ist, der durch einen Kolben (9) mit nach außen führender Kolbenstange (7) in zwei Zylinderräume (11, 12) unterteilt ist, die beide zum Einstellen der Kolbenstellung über ein Ventil (15) miteinander zu verbinden sind, dadurch gekennzeichnet, daß das der Freiseite des Kolbens (9) gegen-überliegende Dichtstück (2) zum Zylinderin-nenraum (Zylinderraum 11) hin einen mit einer Kreisnut (28) versehenen Vorsatz (25) aufweist, daß vom Grund der Kreisnut aus eine Bohrung (26) ins Freie führt und daß in die Kreisnut (28) ein Dichtring (27) eingelegt ist, um eine Befüllung mit Druckgas und Hydraulikflüssigkeit zu ermöglichen.

2. Gasfeder nach Anspruch 1, dadurch gekennzeichnet, daß der freie Querschnitt der Kreisnut (28) V-förmig ist und der Dichtring (27) einen kreisförmigen Querschnitt aufweist (Rundgummidichtung, O-Ring).

**Claims**

1. A gas spring formed from a cylinder (1) which is filled with compressed gas or a mixture of compressed gas and hydraulic fluid and which is closed at its ends by means of sealing portions (2, 3) and which is subdivided by a piston (9) with a piston rod (7) which extends outwardly, into two cylinder chambers (11, 12) which are both to be connected to each other by way of a valve (15) for adjustment of the piston position, characterised in that the sealing portion (2) which is in opposite relationship to the free side of the piston (9) has, towards the interior of the cylinder (cylinder chamber 11), an extension portion (25) which is provided with a circular groove (28), that a bore (26) leads from the bottom of the circular groove into the open air, and that a sealing ring (27) is fitted into the circular groove (28) to permit filling with compressed gas and hydraulic fluid.

2. A gas spring according to claim 1 characterised in that the free cross-section of the circular groove (28) is V-shaped and the sealing ring (27) is of a circular cross-section (round rubber seal, O-ring).

**Revendications**

1. Ressort à gaz, formé d'un cylindre (1) qui est empli de gaz comprimé ou d'un mélange de gaz comprimé et d'un fluide hydraulique, est obturé à ses faces extrêmes au moyen de pièces d'étanchement (2, 3) et est subdivisé, par l'intermédiaire d'un piston (9) dont la tige (7) dépasse vers l'extérieur, en deux chambres cylindriques (11, 12) destinées à être reliées l'une à l'autre, par l'intermédiaire d'une soupape (15), en vue de régler la position du piston, caractérisé par le fait que la pièce d'étanchement (2) opposée au côté libre du piston (9) présente, en direction de l'espace interne du cylindre (chambre cylindrique 11), une avancée (25) munie d'une rainure circulaire (28) ; par le fait qu'un perçage (26) gagne l'air libre à partir du fond de la rainure circulaire ; et par le fait qu'une bague d'étanchement (27) est encastrée dans la rainure circulaire (28), pour permettre un emplissage par du gaz comprimé et un fluide hydraulique.

2. Ressort à gaz selon la revendication 1, caractérisé par le fait que la section transversale libre de la rainure circulaire (28) est configurée en V, et la bague d'étanchement (27) possède une section transversale circulaire (garniture d'étanchement ronde en caoutchouc, joint torique).